# EUROPEAN PATENT APPLICATION

(11) **EP 4 697 233 A1**
(43) Date of publication of application: **18.02.2026**
(21) Application number: 25194606.7
(22) Date of filing: 07.08.2025
(51) Int. Cl.: G06N 3/004, G06N 3/045

(54) **COST EFFECTIVE MULTI-AGENT SYSTEMS AND METHODS FOR SOLVING MACHINE LEARNING TASKS USING LARGE LANGUAGE MODELS**

(30) Priority: 13.08.2024 IN 202421061521
(71) Applicant: Tata Consultancy Services Limited, Maharashtra (IN)
(72) Inventor: GANDHI, Shubham Rajnish, 411057 Pune, Maharashtra (IN); PATWARDHAN, Manasi Samarth, 411057 Pune, Maharashtra (IN); VIG, Lovekesh, 110001 New Delhi, Delhi (IN); SHROFF, Gautam, 122004 Gurgaon, Haryana (IN)
(74) Representative: Goddar, Heinz J.

(57) **Abstract**

Large Language Models (LLMs) excel in diverse applications including generation of code snippets but often struggle with generating code for complex Machine Learning (ML) tasks. Although existing LLM single agent-based approaches give varying performance depending on the task complexity, they purely rely on larger and expensive models such as Generative Pre-Trained Transformers (e.g., GPT-4). Present disclosure implements a LLM multi-agent-based system which leverages combination of experts using profiling, efficient retrieval of past observations, LLM cascades, and ask-the-expert calls to enable obtain task specification, actions to be performed along with associated justification and reasoning based on which appropriate planner(s) invoke respective agents for execution of a machine learning task.

## Description

### CROSS-REFERENCE TO RELATED APPLICATIONS AND PRIORITY

The present application claims priority to Indian application no. 202421061521, filed on August 13, 2024.

### TECHNICAL FIELD

The disclosure herein generally relates to Large Language Model based multi agent machine learning (ML) assistant, and, more particularly, to cost effective multi-agent systems and methods for solving machine learning tasks using large language models.

### BACKGROUND

Large Language Model (LLM) agent systems excel in simulating iterative processes, since they comprise an environment containing code files, description files and data files and a pre-defined action space allowing interaction with the environment. This demonstrates their capability to address intricate engineering challenges effectively. Transitioning to solving Machine Learning (ML) tasks brings its own challenges since they often involve training models on datasets, tuning hyperparameters, devising ways to improve performance, etc. These tasks are not straightforward and require a deep understanding of the underlying algorithms and techniques along with specific libraries used for implementation of plans. Although there exist AutoML-based approaches for automating such tasks, these offer limited flexibility since they typically operate within predefined constraints and search spaces in the form of possible configurations of architectures and/ or hyper-parameters, which may limit their ability to explore solutions out-of-distribution of the search space.

Further, though LLMs are adept at handling a vast array of applications ranging from natural language to code-related tasks, this capability does not often translate to more complicated and nuanced tasks. Most code-related efforts involving LLMs are based on tasks such as HumanEval and MBXP (Most Basic X(Python/Java/Go/Ruby, etc.) Programming Problems) (Ben et. Al, 2023)), that have a relatively easier level of complexity that is far from what is experienced by data scientists. However, real-world engineering challenges demand nuanced problem-solving and intricate planning, often involving multiple rounds of strategizing, experimentation, and recalibration. Although existing single agent-based LLM approaches give varying performance depending on the task complexity, they purely rely on larger and expensive models such as Generative Pre-Trained Transformers (e.g., GPT-4).

### SUMMARY

Embodiments of the present disclosure present technological improvements as solutions to one or more of the above-mentioned technical problems recognized by the inventors in conventional systems. For example, in one aspect, there is provided a processor implemented cost effective multi-agent method for solving machine learning tasks using large language models. The method comprises receiving, via one or more hardware processors, a task specification, wherein the task specification comprises a task description and one or more starter files; obtaining, from a first task planner amongst a plurality of sequentially chained task planners via the one or more hardware processors, one or more actions to be performed along with an associated justification, and an associated reasoning thereof based on the task description and the one or more starter files, wherein the associated justification, and the associated reasoning are generated by the first task planner based on a first set of structured prompts; performing a comparison of (a) the associated justification, and the associated reasoning pertaining to the one or more actions with a pre-defined format, and (b) number of attempts involved in obtaining the associated justification, and the associated reasoning pertaining in the associated format with an attempt threshold; performing, based on the comparison, one of: invoking, by the first task planner, a first agent from a plurality of agents for execution of at least one action from the one or more actions obtained from the first task planner; executing at least one action from the one or more actions by the first agent; and generating an execution log based on the at least one executed action and storing generated execution log in a database thereof; or obtaining, from a second task planner amongst the plurality of sequentially chained task planners via the one or more hardware processors, the one or more actions to be performed along with the associated justification, and the associated reasoning thereof based on the task description, wherein the associated justification, and the associated reasoning are generated by the second task planner based on a second set of structured prompts; invoking, by the second task planner, a second agent from the plurality of agents for execution of the at least one action from the one or more actions based on number of attempts involved in generating the associated justification, and the associated reasoning in the associated format.

**In** an embodiment, the second agent is invoked for execution of the at least one action that has been previously repeated for 'm' consecutive times for 'n' steps.

**In** an embodiment, each task planner from the plurality of sequentially chained task planners is associated with a unique task planner cost.

**In** an embodiment, the one or more starter files comprise information in programming code and natural language.

**In** an embodiment, each task planner from the plurality of sequentially chained task planners and each agent amongst the plurality of agents comprises an action-based distinct profile that indicates a role being executed during the one or more actions being generated or performed.

In another aspect, there is provided a processor implemented cost effective multi-agent system for solving machine learning tasks using large language models. The system comprises: a memory storing instructions; one or more communication interfaces; and one or more hardware processors coupled to the memory via the one or more communication interfaces, wherein the one or more hardware processors are configured by the instructions to: receive a task specification, wherein the task specification comprises a task description and one or more starter files; obtain, from a first task planner amongst a plurality of sequentially chained task planners, one or more actions to be performed along with an associated justification, and an associated reasoning thereof based on the task description and the one or more starter files, wherein the associated justification, and the associated reasoning are generated by the first task planner based on a first set of structured prompts; perform a comparison of (a) the associated justification, and the associated reasoning pertaining to the one or more actions with a pre-defined format, and (b) number of attempts involved in obtaining the associated justification, and the associated reasoning pertaining in the associated format with an attempt threshold; perform, based on the comparison, one of: invoking, by the first task planner, a first agent from a plurality of agents for execution of at least one action from the one or more actions obtained from the first task planner; executing at least one action from the one or more actions by the first agent; and generating an execution log based on the at least one executed action and storing generated execution log in a database thereof; or obtaining, from a second task planner amongst the plurality of sequentially chained task planners via the one or more hardware processors, the one or more actions to be performed along with the associated justification, and the associated reasoning thereof based on the task description, wherein the associated justification, and the associated reasoning are generated by the second task planner based on a second set of structured prompts; invoking, by the second task planner, a second agent from the plurality of agents for execution of the at least one action from the one or more actions based on number of attempts involved in generating the associated justification, and the associated reasoning in the associated format.

**In** an embodiment, the second agent is invoked for execution of the at least one action that has been previously repeated for 'm' consecutive times for 'n' steps.

**In** an embodiment, each task planner from the plurality of sequentially chained task planners is associated with a unique task planner cost.

**In** an embodiment, the one or more starter files comprise information in programming code and natural language.

**In** an embodiment, each task planner from the plurality of sequentially chained task planners and each agent amongst the plurality of agents comprises an action-based distinct profile that indicates a role being executed during the one or more actions being generated or performed.

**In** yet another aspect, there are provided one or more non-transitory machine-readable information storage mediums comprising one or more instructions which when executed by one or more hardware processors cause solving machine learning tasks using large language models by receiving a task specification, wherein the task specification comprises a task description and one or more starter files; obtaining, from a first task planner amongst a plurality of sequentially chained task planners, one or more actions to be performed along with an associated justification, and an associated reasoning thereof based on the task description and the one or more starter files, wherein the associated justification, and the associated reasoning are generated by the first task planner based on a first set of structured prompts; performing a comparison of (a) the associated justification, and the associated reasoning pertaining to the one or more actions with a pre-defined format, and (b) number of attempts involved in obtaining the associated justification, and the associated reasoning pertaining in the associated format with an attempt threshold; performing, based on the comparison, one of: invoking, by the first task planner, a first agent from a plurality of agents for execution of at least one action from the one or more actions obtained from the first task planner; executing at least one action from the one or more actions by the first agent; and generating an execution log based on the at least one executed action and storing generated execution log in a database thereof; or obtaining, from a second task planner amongst the plurality of sequentially chained task planners via the one or more hardware processors, the one or more actions to be performed along with the associated justification, and the associated reasoning thereof based on the task description, wherein the associated justification, and the associated reasoning are generated by the second task planner based on a second set of structured prompts; invoking, by the second task planner, a second agent from the plurality of agents for execution of the at least one action from the one or more actions based on number of attempts involved in generating the associated justification, and the associated reasoning in the associated format.

In an embodiment, the second agent is invoked for execution of the at least one action that has been previously repeated for 'm' consecutive times for 'n' steps.

In an embodiment, each task planner from the plurality of sequentially chained task planners is associated with a unique task planner cost.

In an embodiment, the one or more starter files comprise information in programming code and natural language.

In an embodiment, each task planner from the plurality of sequentially chained task planners and each agent amongst the plurality of agents comprises an action-based distinct profile that indicates a role being executed during the one or more actions being generated or performed.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for solving machine learning tasks using large language models (LLMs), in accordance with an embodiment of the present disclosure.
FIG. 2 depicts an exemplary flow chart illustrating a method for solving machine learning tasks using large language models, using the system of FIG. 1, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Although Large Language Models (LLMs) are adept at handling a vast array of applications ranging from natural language to code-related tasks, this capability does not often translate to more complicated and nuanced tasks. Most code-related efforts involving LLMs are based on tasks such as HumanEval (Chen et al., 2021) and MBXP (Most Basic X(Python/Java/Go/Ruby, etc.) Programming Problems) (Ben et. Al, 2023), that have a relatively easier level of complexity that is far from what is experienced by data scientists. However, real-world engineering challenges demand nuanced problem-solving and intricate planning, often involving multiple rounds of strategizing, experimentation, and recalibration. LLM agent systems excel in simulating this iterative process, since they comprise of an environment containing code files, description files and data files and a pre-defined action space allowing interaction with the environment. This demonstrates their capability to address intricate engineering challenges effectively.

Transitioning to solving Machine Learning (ML) tasks brings its own challenges since they often involve training models on datasets, tuning hyperparameters, devising ways to improve performance, etc. These tasks are not straightforward and require a deep understanding of the underlying algorithms and techniques along with specific libraries used for implementation of plans. Although there exist AutoML-based approaches for automating such tasks, these offer limited flexibility since they typically operate within predefined constraints and search spaces in the form of possible configurations of architectures and/ or hyper-parameters, which may limit their ability to explore solutions out-of-distribution of the search space. While works such as ChatDev and MetaGPT have explored the capabilities of LLM Agents in a software development environment, there is a notable scarcity of research on utilizing LLM Agents for solving ML tasks.

Conventionally known MLAgentBench addresses ML problem solving capabilities of LLM Agents. Although they get good performance on some tasks in their benchmark, they focus on single-agent systems using expensive LLMs such as GPT-4, which costs approximately $0.52-$2.9 per run, depending on the task. For the experiments they conduct, they go for 8 runs per task for 15+ tasks, leading to a very high experimental cost of approximately $200+. With such larger models becoming increasingly expensive to use, there is a natural incentive to develop no-cost or low-cost systems using smaller, open-source models and making them equally capable for niche tasks. However, existing agent creation frameworks like AutoGenWu et al. do not prioritize cost-reduction. Replacing single-agent systems using expensive LLMs with single-agent smaller, open-source LLMs may not serve the purpose. The initial experiments with replacing all LLM calls for auto-generating codes for ML tasks, with open source LLMs, namely, Gemini-Pro, CodeLlama and Mixtral, yielded very poor results for all of the tasks in a single-agent setting. In real-world settings any complicated tasks are rarely tackled by a single individual alone, especially when all the individuals do not possess the required expertise to perform the task.

Instead, teams of engineers collaborate, with each member having a unique role (persona) and contributing unique expertise and skills to achieve the target with collective efforts. Past works on LLM agents have simulated this real-world setting by designing multi-agent frameworks, combining LLM experts and defining cascades for tasks such as code generation, reasoning, question answering, etc. Cascades refer to the chaining of LLMs in a progressive fashion, where a weaker LLM is invoked first and if the response is not satisfactory then stronger LLMs are invoked.

In the present disclosure, system and method described herein address the gap of utilizing LLMs for solving ML tasks by leveraging - (i) multi-LLM agents as a combination of experts using profiling, (ii) LLM Cascades, (iii) Efficient retrieval of relevant past observations, and (iv) the occasional ask-the-expert of the system of the present disclosure calls to GPT-4 for planning. The approach aims to bridge the divide between capabilities of less expensive LLMs and the requirements of complex ML tasks, offering a more cost-efficient and scalable solution. Through empirical analysis, the present disclosure has validated the following:
1. The multi-agent system using no-cost Gemini-Pro as the base LLM of the present disclosure, is able to perform tasks at a fraction of the cost (on an average average $0.054 per run per ML task in MLAgentBench Dataset) as compared to benchmarked single-agent GPT4 system presented in Huang et al. (2023) (on an average $0.931 per run per task)
2. With 94.2% reduction in the cost, multi-agent system using no-cost Gemini-Pro as the base LLM of the present disclosure is able to yield better success rate of 32.95% averaged for all the tasks in MLAgentBench as compared to the GPT4 based single-agent system yielding 22.72% average success rate for all tasks.
3. The multi-agent system using no-cost Gemini-Pro as the base LLM of the present disclosure is able to achieve equal or better performance for 45.45% of tasks when compared to the GPT4-based Single-Agent system in Huang et al. (2023), whereas it yielded comparable performance for other tasks.

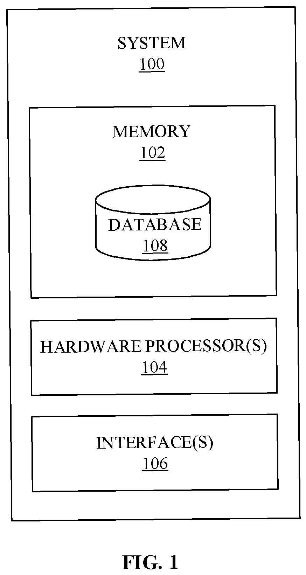

Referring now to the drawings, and more particularly to FIGS. 1 through 2, where similar reference characters denote corresponding features consistently throughout the figures, there are shown preferred embodiments, and these embodiments are described in the context of the following exemplary system and/or method.

FIG. 1 depicts an exemplary system 100 for solving machine learning tasks using large language models (LLMs), in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to task specifications, task descriptions and one or more starter files. The database 108 further comprises information obtained such as one or more actions to be performed along with an associated justification, and an associated reasoning thereof based on the task description and the one or more starter files, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

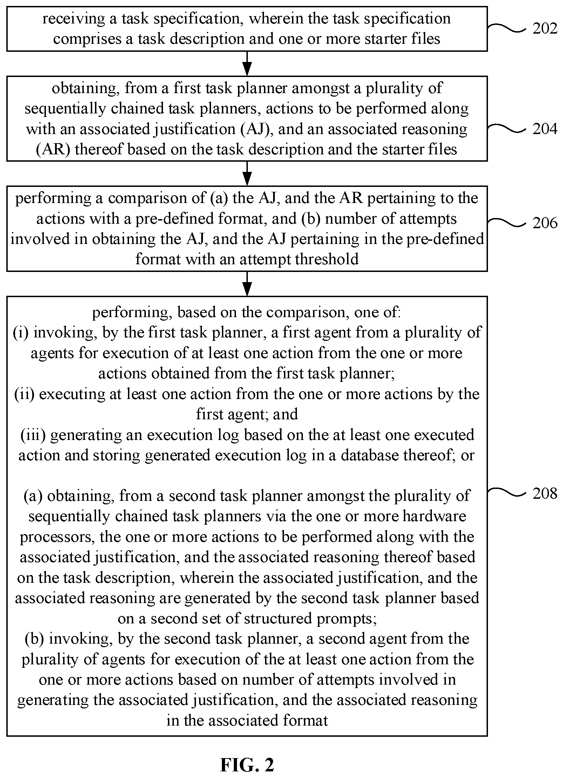

FIG. 2, with reference to FIG. 1, depicts an exemplary flow chart illustrating a method for solving machine learning tasks using large language models, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2.

At step 202 of the method of the present disclosure, the one or more hardware processors 104 receive a task specification. The task specification comprises a task description and one or more starter files. The one or more starter files comprise information in programming code and natural language. Below description illustrates the task specification.

Research Problem: Given a training script on a dataset train.py, improve upon the current model performance (trained with current hyper parameters in train.py) for more than 10%. The training epochs should be within 10 to save time. Save per class probabilities for test set examples to submission.csv as shown in train.py.
You do not know anything about this problem so far.
Follow these instructions and do not forget them:
- First, come up with a high level plan based on your understanding of the problem and available tools and record it in the Research Plan and Status. You can revise the plan later.
- Research Plan and Status should be well organized and succinctly keep track of 1) high level plan (can be revised), 2) what steps have been done and what steps are in progress, 3) short results and conclusions of each step after it has been performed.
- Research Plan and Status must only include progress that has been made by previous steps. It should not include results not directly confirmed by the previous observation.
- Performance numbers and estimates can only be confirmed and included in the status by running the code and observing the output.
- You should come up with a good experiment design that addresses the problem, and whenever applicable, define and measure the baseline performance of the relevant system or model before attempting any improvements.
- Follow the plan and try to achieve the goal as straightforwardly as possible.
- Highlight the supporting experiment results and reasoning before drawing any conclusions.
- Do not try installing any new packages or libraries.
- If you believe you have solved the problem, you can use the Final Answer action to submit your answer. You can only submit once, so double check that you have achieved the goal before submitting.

At step 204 of the method of the present disclosure, the one or more hardware processors 104 obtain from a first task planner amongst a plurality of sequentially chained task planners, one or more actions to be performed along with an associated justification, and an associated reasoning thereof based on the task description and the one or more starter files. The associated justification, and the associated reasoning are generated by the first task planner based on a first set of structured prompts. The plurality of sequentially chained task planners is a plurality of large language models (LLMs), in one embodiment of the present disclosure.

The system capitalizes on the groundwork laid by MLAgentBench (Huang et al., 2023) that provides a straightforward single LLM Agent based solution for the tasks. It operates through an organized prompt-response based interaction system by an agent that uses a set of available actions to interact with the environment. Through carefully structured prompts, they aim to ensure clarity and precision in conveying task descriptions, available tools (possible set-of actions), and most recent steps taken, to enhance the agent's decision-making process. To emphasize thoughtful decision-making during planning, the LLM is instructed to stick to a structured format for providing responses to the aforementioned structured prompts, including elements such as 'Reflection' on understanding the prior observations, an updatable 'Istepwisetion Plan' and step-wise 'Status', 'Fact check' on if the objective statements from the Plan and Status guessed or directly confirmed and 'Thought' on the action to be performed with justification and reasoning. This should be followed by the proposed 'Action' for the next step along with the corresponding 'Action Inputs' in JSON format. This structured response format is aimed at enhancing the agent's ability to engage in reflective thinking, better planning, and result verification. They also make use of a logging mechanism inspired by the memory stream paradigm (Park et al., 2023), which enables efficient management of historical data rather than inundating the LLM with extensive historical context. By adopting this design, they ensure that the log file serves as a repository of relevant information that can be easily retrieved and updated by the agent using LLMs. Retrieval R runs refer to the ones having this functionality enabled. Thus, this retrieved information coupled with the recent actions and observations make up the historical context. The retrieved information acts as long-term memory whereas the recent actions and observations act as short-term memory.

At step 206 of the method of the present disclosure, the one or more hardware processors 104 perform a comparison of (a) the associated justification, and the associated reasoning pertaining to the one or more actions with a pre-defined format, and (b) number of attempts involved in obtaining the associated justification, and the associated reasoning pertaining in the associated format with an attempt threshold. Based on the comparison, the system 100 performs the following at step 208. For instance, if the above condition is satisfied, then the first task planner invokes a first agent from a plurality of agents for execution of at least one action from the one or more actions obtained from the first task planner. At least one action from the one or more actions is then executed by the first agent and an execution log is generated based on the at least one executed action and storing generated execution log in a database thereof. In case the above condition is not satisfied, then a set of actions are obtained from a second task planner amongst the plurality of sequentially chained task planners wherein the set of actions to be performed are obtained along with the associated justification, and the associated reasoning thereof based on the task description. In this case, the associated justification, and the associated reasoning are generated by the second task planner based on a second set of structured prompts. A second agent from the plurality of agents is then invoked by the second task planner for execution of the at least one action from the set of actions based on number of attempts involved in generating the associated justification, and the associated reasoning in the associated format. The second agent is invoked for execution of the at least one action that has been previously repeated for 'm' consecutive times for 'n' steps, in one embodiment of the present disclosure.

LLM Cascade refers to the technique of conditional invocation of sequentially connected LLMs (*L*₁, *L*₂,... *Lₖ*). Here, LLMs are chained by the system 100 in a manner wherein *cost*(*L*₁) *< cost*(*L*₂) *< cost*(*Lₖ*)*.* Here the cost is represented by the latest pricing information of the corresponding models. A set of protocols are enforced to decide if the response by an LLM at a particular "cascade" is acceptable or not. If it is acceptable, then the response is used as is and if not, the system 100 moves up the cascade to the next LLM. For example, the LLMs in cascade could be Gemini-Pro (a no-cost LLM) followed by GPT4 (an expensive LLM). If Gemini-Pro fails to generate an acceptable response before exhausting its maximum retries, then the system would invoke GPT4 for that step. In our study, the protocols to move up the cascade are two-fold - (i) If the current LLM fails to generate a response that adheres to the specified format, even after maximum m number of tries, or (ii) If the current LLM chooses an action that has already been repeated r consecutive times in the past r steps. Thus, each task planner from the plurality of sequentially chained task planners is associated with a unique task planner cost. Further, each task planner from the plurality of sequentially chained task planners and each agent amongst the plurality of agents comprises an action-based distinct profile that indicates a role being executed during the one or more actions being generated or performed.

The system 100 and the method characterize the multi-agent nature by categorizing the agents into two specific classes - (i) A Planner (P) (e.g., an LLM) that utilizes the aforementioned agent/planner structure to consider historical context and 'plan' the next action, and (ii) Workers (Wis)/agents (could be a LLM and/or a ML agent) that execute the actions. In addition to a profile for the planner, the system 100 also includes distinct personas for workers/agents performing distinct actions that involve calls to LLMs such as Edit Script, Understand File, etc. as seen in Table 1. Instead of having the default" You are a helpful AI assistant" system prompt, the system 100 has distinct profiles for each action resulting in a system with agents specialized in distinct roles. In other words, each task planner from the plurality of sequentially chained task planners and each agent (also referred to as worker agent) amongst the plurality of agents comprises an action-based distinct profile that indicates a role being executed during the one or more actions being generated or performed. These worker agents do not interact with each other and are instead invoked by the Planner P agent whenever it chooses to perform a corresponding action. Executing these actions may or may not involve an internal LLM call. Table 1 illustrates agents for callable actions and profiles given through system prompts to agents involving LLM calls. NA - no profile as these are programmatic agents and not LLM agents.

**Table 1**

| Type | Agent | Profile |
|---|---|---|
| Planner | Default planner | You are a planner for solving machine learning tasks |
| | Planning expert | You are an expert in planning for solving machine learning tasks. |
| High-level worker | Understand file | You are an expert in understanding files containing both code and natural language |
| | Edit Script (AI) | You are an expert in editing code files |
| | Reflection | You are an expert in reflecting on previous actions when solving a machine learning task. |
| | Inspect script lines | NA |
| Low-level action worker | List files | NA |
| | Copy file | NA |
| | Undo edit script | NA |
| | Final answer | NA |
| | Execute script | NA |

The above steps are better understood by way of following example scenario.
Enabled Tools in Prompt: ['List Files', 'Copy File', 'Undo Edit Script', 'Execute Script', 'Final Answer', 'Understand File', 'Inspect Script Lines', 'Edit Script (AI)', 'Reflection', 'Request Planning Expert Help']
   Start
   You are a helpful research assistant. You have access to the following tools:
   - List Files:
      Use this to navigate the file system.
      Usage:
         '''
      Action: List Files
      Action Input: {
      "dir_path": [a valid relative path to a directory, such as "." or "folder1/folder2"] }
      Observation: [The observation will be a list of files and folders in dir_path or current directory is dir_path is empty, or an error message if dir_path is invalid.]
         '''
   - Copy File:
      Use this to copy a file to a new location with a new name.
      Usage:
         '''
      Action: Copy File
      Action Input: {
         "source": [a valid file name with relative path to current directory if needed], "destination": [a valid file name with relative path to current directory if needed] }
      Observation: [A success message if the file is copied successfully, or an error message if the file cannot be copied.]
         '''
   - Undo Edit Script:
      Use this to undo the last edit of the python script.
      Usage:
         '''
      Action: Undo Edit Script
      Action Input: { "script_name": [a valid python script name with relative path to current directory if needed] }
      Observation: [The observation will be the content of the script before the last edit. If the script does not exist, the observation will be an error message.]
         '''
   - Execute Script:
      Use this to execute the python script. The script must already exist.
      Usage:
         '''
      Action: Execute Script
      Action Input: { "script_name": [a valid python script name with relative path to current directory if needed] }
      Observation: [The observation will be output of the script or errors.]
         '''
   - Final Answer:
      Use this to provide the final answer to the current task.
      Usage:
         '''
      Action: Final Answer
      Action Input: { "final_answer": [a detailed description on the final answer] }
      Observation: [The observation will be empty.]
         '''
   - Understand File:
      Use this to read the whole file and understand certain aspects. You should provide detailed description on what to look for and what should be returned. To get a better understanding of the file, you can use the Inspect Script Lines action to inspect specific part of the file.
      Usage:
         '''
      Action: Understand File
      Action Input: { "file_name": [a valid file name with relative path to current directory if needed], "things to look for": [a detailed description on what to look for and what should returned] }
      Observation: [The observation will be a description of relevant content and lines in the file. If the file does not exist, the observation will be an error message.]
         '''
   - Inspect Script Lines:
      Use this to inspect specific part of a python script precisely, or the full content of a short script. The number of lines to display is limited to 100 lines. This is especially helpful when debugging.
      Usage:
         '''
      Action: Inspect Script Lines
      Action Input: { "script_name": [a valid python script name with relative path to current directory if needed], "start_line_number": [a valid line number], "end_line_number": [a valid line number] }
      Observation: [The observation will be the content of the script between start_line_number and end_line_number. If the script does not exist, the observation will be an error message.]
         '''
   - Edit Script (AI):
      Use this to do a relatively large but cohesive edit over a python script. Instead of editing the script directly, you should describe the edit instruction so that another AI can help you do this.
      Usage:
         '''
      Action: Edit Script (AI)
      Action Input: {
      "script_name": [a valid python script name with relative path to current directory if needed. An empty sctipt will be created if it does not exist.],
      "edit_instruction": [a detailed step by step description on how to edit it.],
      "save_name": [a valid file name with relative path to current directory if needed] }
      Observation: [The observation will be the edited content of the script. If the script does not exist, the observation will be an error message. You should always double check whether the edit is correct. If it is far from correct, you can use the Undo Edit Script action to undo the edit.]
         '''
   - Reflection:
      Use this to look over all the past steps and reflect. You should provide a detailed description on what to reflect on and what should be returned.
      Usage:
         '''
      Action: Reflection
      Action Input: { "things_to_reflect_on": [a detailed description on what to reflect on and what should be returned] }
      Observation: [The observation will be the reflection.]
         '''
   - Request Planning Expert Help:
      Use this to request help from planning expert. Use this only when you get stuck at a step. Give appropriate context in terms of summary of what you have already tried, how you failed and what needs to be done.
      Usage:
         '''
      Action: Request Planning Expert Help
      Action Input: { "request": [a detailed description on what to do along with appropriate context] }
      Observation: [The observation will be the response from human.]
         '''
      Research Problem: Given a training script on a dataset train.py, improve upon the current model performance (trained with current hyperparmeters in train.py) for more than 10%. The training epochs should be within 10 to save time. Save per class probabilities for test set examples to submission.csv as shown in train.py.
      You do not know anything about this problem so far.
      Follow these instructions and do not forget them:
         - First, come up with a high-level plan based on your understanding of the problem and available tools and record it in the Research Plan and Status. You can revise the plan later.
         - Research Plan and Status should be well organized and succinctly keep track of 1) high level plan (can be revised), 2) what steps have been done and what steps are in progress, 3) short results and conclusions of each step after it has been performed.
         - Research Plan and Status must only include progress that has been made by previous steps. It should not include results not directly confirmed by the previous observation.
         - Performance numbers and estimates can only be confirmed and included in the status by running the code and observing the output.
         - You should come up with a good experimental design that addresses the problem, and whenever applicable, define and measure the baseline performance of the relevant system or model before attempting any improvements.
         - Follow the plan and try to achieve the goal as straightforwardly as possible.
         - Highlight the supporting experiment results and reasoning before drawing any conclusions.
         - Do not try installing any new packages or libraries.
         - If you believe you have solved the problem, you can use the Final Answer action to submit your answer. You can only submit once, so double check that you have achieved the goal before submitting.
      Always respond in this format exactly:
         Reflection: What does the observation mean? If there is an error, what caused the error and how to debug?
         Research Plan and Status: The full high level research plan, with current status and confirmed results of each step briefly annotated. It must only include progress that has been made by previous steps. If there is any update, enclose the new update text in double asterisks **like this**. If there is no update, just copy the previous step Research Plan and Status. The high-level plan from the previous step should be fully retained, unless it is intentionally revised.
         Fact Check: List all objective statements in the updates to Research Plan and Status one by one and point out whether it is guessed versus directly confirmed by the previous observation directly above. Performance numbers can only be confirmed by running the code and observing the output.
         Thought: What you are currently doing, what actions to perform and why
         Action: the action to take, should be one of the names of the tools
         Action Input: the input to the action as a valid JSON string
         Observation:
            '''
         the result of the action
            '''
         Step 0:
         Reflection:
            Research Plan and Status: 1) Understand the problem and the current model performance. 2) Improve the model performance by tuning hyperparameters. 3) Save per class probabilities for test set examples to submission.csv.
            Fact Check:
               Thought: I should first understand the problem and the current model performance.
               Action: Understand File
               Action Input: {
               "file_name": "train.py",
               "things to look for": 1) What is the current model performance? 2) What hyperparameters are used in the training script?"
                  }
               Observation:
                  '''
                  1) **What is the current model performance?**
                     - Train Accuracy: 86.23%, Test Accuracy: 79.33%
                     - This is found in the last few lines of the script:
                        '''

                     train_accuracy = test_model (train_dataloader)
                     test_accuracy = test_model(test_dataloader)
                     print (f'Train Accuracy: {train_accuracy:.2f}%, Test Accuracy: {test_accuracy:.2f}%') '''
                  2) **What hyperparameters are used in the training script?**
                     - Batch size: 128
                     - Epochs: 5
                     - Learning rate: 0.1
                     - Momentum: 0.9
                     - This is found in the following lines of the script:
                        '''

                     batch_size = 128
                     epochs = 5
                     optimizer = torch.optim.SGD(model.parameters(), lr=0.1, momentum=0.9)
                     Step 1:
                     Reflection: The observation provides the current model performance metrics and the hyperparameters used in the training script. The model achieves a train accuracy of 86.23% and a test accuracy of 79.33%. The hyperparameters include a batch size of 128, 5 epochs, a learning rate of 0.1, and a momentum of 0.9. This information is crucial for understanding the baseline performance and the starting point for hyperparameter tuning.
                     Research Plan and Status:
                        1) Understand the problem and the current model's performance. Done. Current model performance: Train Accuracy: 86.23%, Test Accuracy: 79.33%. Hyperparameters: Batch size: 128, Epochs: 5, Learning rate: 0.1, Momentum: 0.9.
                        2) Improve the model performance by tuning hyperparameters. In progress.
                        3) Save per class probabilities for test set examples to submission.csv.
                     Fact Check:
                        - The current model performance (Train Accuracy: 86.23%, Test Accuracy: 79.33%) is directly confirmed by the observation.
                        - The hyperparameters used in the training script (Batch size: 128, Epochs: 5, Learning rate: 0.1, Momentum: 0.9) are directly confirmed by the observation.
                     Thought: With the current model performance and hyperparameters known, the next step is to design a strategy for hyperparameter tuning to improve the model performance. Given the constraints of the task, focusing on adjusting the learning rate, epochs (within the limit of 10), and possibly the batch size could be beneficial. Additionally, introducing or adjusting other hyperparameters like weight decay could also be considered if applicable within the current setup. The goal is to achieve more than a 10% improvement in test accuracy while keeping the training epochs within 10 to save time.
                     Action: Edit Script (AI)
                     Action Input: {
                     "script_name": "train.py",
                     "edit_instruction": "1) Change the number of epochs to 10 to maximize the training within the given limit. 2) Decrease the learning rate to 0.01 to potentially improve the model's ability to converge to a better minimum. 3) Introduce weight decay in the optimizer as a regularization method to prevent overfitting. Set the weight decay to 0.0001. Ensure these changes are made in the appropriate lines where the hyperparameters are defined. ",
                        "
                     Observation:
                        '''
                     A planning expert was called for this step.
                     ActionInputParsingError: Unterminated string starting at: line 4 column 1 (char 472) The action input for Edit Script (AI) needs to be a valid json with proper entries. You may have missed the comma between entries or used triple quotes (json does not recognizes triple quotes). Please use the correct format and try again:
                        { script_name: [a valid python script name with relative path to current directory if needed. An empty sctipt will be created if it does not exist.],
                        edit_instruction: [a detailed step by step description on how to edit it.],
                        save_name: [a valid file name with relative path to current directory if needed]
                           '''
                     Step 2:
                     Reflection: The error message indicates that the action input for Edit Script (AI) is not in a valid JSON format. The input is missing a comma between entries or is using triple quotes, which are not recognized by JSON.
                     Research Plan and Status:
                        1) Understand the problem and the current model performance. Done. Current model performance: Train Accuracy: 86.23%, Test Accuracy: 79.33%. Hyperparameters: Batch size: 128, Epochs: 5, Learning rate: 0.1, Momentum: 0.9.
                        2) Improve the model performance by tuning hyperparameters. In progress.
                        3) Save per class probabilities for test set examples to submission.csv.
                     Fact Check:
                        - The current model performance (Train Accuracy: 86.23%, Test Accuracy: 79.33%) is directly confirmed by the observation.
                        - The hyperparameters used in the training script (Batch size: 128, Epochs: 5, Learning rate: 0.1, Momentum: 0.9) are directly confirmed by the observation.
                     Thought: To fix the error, I need to ensure that the action input for Edit Script (AI) is in a valid JSON format. I will double-check the input and make sure that there are no missing commas or incorrect use of quotes.
                     Action: Edit Script (AI)
                     Action Input: {
                     "script_name": "train.py",
                     "edit_instruction": "1) Change the number of epochs to 10 to maximize the training within the given limit. 2) Decrease the learning rate to 0.01 to potentially improve the model's ability to converge to a better minimum. 3) Introduce weight decay in the optimizer as a regularization method to prevent overfitting. Set the weight decay to 0.0001. Ensure these changes are made in the appropriate lines where the hyperparameters are defined. ",
                     "save_name": "train_edited.py"
                        }
                     Observation:
                        '''
                     The edited file is saved to train_edited.py. Here is the diff, please check if the edit is correct and desirable:
                        ---
                        +++
                        @@ -46,7 +46,7 @@
                        # Define the optimizer and loss function
                        model = Net().to(device)
                        - optimizer = torch.optim.SGD(model.parameters(), lr=0.1, momentum=0.9)
                        + optimizer = torch.optim.SGD(model.parameters(), lr=0.01, momentum=0.9, weight_decay=0.0001)
                        criterion = nn.CrossEntropyLoss()
                        def test_model(dataloader):
                        @@ -65,7 +65,7 @@
                        return 100 * correct / total
                        # Train the model
                        - epochs = 5
                        + epochs = 10
                     for epoch in range(epochs):
                        running_loss = 0.0
                        model.train()
                           '''
                     Step 3:
                     Reflection: The observation shows the diff of the edited file train_edited.py. The changes made are:
                        - The number of epochs is changed from 5 to 10.
                        - The learning rate is decreased from 0.1 to 0.01.
                        - Weight decay is introduced in the optimizer with a value of 0.0001.
                     These changes are in line with the edit instructions provided.
                     Research Plan and Status:
                        1) Understand the problem and the current model's performance. Done. Current model performance: Train Accuracy: 86.23%, Test Accuracy: 79.33%. Hyperparameters: Batch size: 128, Epochs: 5, Learning rate: 0.1, Momentum: 0.9.
                        2) Improve the model performance by tuning hyperparameters. In progress. Edited the training script (train_edited.py) to change the number of epochs to 10, decrease the learning rate to 0.01, and introduce weight decay with a value of 0.0001.
                        3) Save per class probabilities for test set examples to submission.csv.
                     Fact Check:
                        - The current model performance (Train Accuracy: 86.23%, Test Accuracy: 79.33%) is directly confirmed by the observation.
                        - The hyperparameters used in the training script (Batch size: 128, Epochs: 5, Learning rate: 0.1, Momentum: 0.9) are directly confirmed by the observation.
                        - The edit to the training script (train_edited.py) to change the number of epochs to 10, decrease the learning rate to 0.01, and introduce weight decay with a value of 0.0001 is directly confirmed by the observation.
                     Thought: The next step is to execute the edited training script (train_edited.py) to see if the model performance improves.
                     Action: Execute Script
                     Action Input: {
                     "script_name": "train_edited.py"
                        }
                     Observation:
                        '''
                     The script has been executed. Here is the output:
                        Files already downloaded and verified
                        Files already downloaded and verified
                        [1, 100] loss: 2.300
                        [1, 200] loss: 2.196
                        [1, 300] loss: 1.919
                        Epoch [1/10], Train Accuracy: 36.83%, Test Accuracy: 37.13%
                        [2, 100] loss: 1.649
                        [2, 200] loss: 1.573
                        [2, 300] loss: 1.518
                        Epoch [2/10], Train Accuracy: 48.85%, Test Accuracy: 48.94%
                        [3, 100] loss: 1.440
                        [3, 200] loss: 1.389
                        [3, 300] loss: 1.367
                        Epoch [3/10], Train Accuracy: 54.10%, Test Accuracy: 53.06%
                        [4, 100] loss: 1.307
                        [4, 200] loss: 1.270
                        [4, 300] loss: 1.261
                        Epoch [4/10], Train Accuracy: 58.61%, Test Accuracy: 57.22%
                        [5, 100] loss: 1.186
                        [5, 200] loss: 1.181
                        [5, 300] loss: 1.181
                        Epoch [5/10], Train Accuracy: 59.50%, Test Accuracy: 57.64%
                        [6, 100] loss: 1.139
                        [6, 200] loss: 1.113
                        [6, 300] loss: 1.115
                        Epoch [6/10], Train Accuracy: 61.91%, Test Accuracy: 59.38%
                        [7, 100] loss: 1.063
                        [7, 200] loss: 1.077
                        [7, 300] loss: 1.037
                        Epoch [7/10], Train Accuracy: 64.26%, Test Accuracy: 61.32%
                        [8, 100] loss: 1.006
                        [8, 200] loss: 1.003
                        [8, 300] loss: 1.005
                        Epoch [8/10], Train Accuracy: 67.11%, Test Accuracy: 62.91%
                        [9, 100] loss: 0.954
                        [9, 200] loss: 0.960
                        [9, 300] loss: 0.983
                        Epoch [9/10], Train Accuracy: 68.12%, Test Accuracy: 63.32%
                        [10, 100] loss: 0.931
                        [10, 200] loss: 0.905
                        [10, 300] loss: 0.937
                        Epoch [10/10], Train Accuracy: 68.94%, Test Accuracy: 62.12%
                        Train Accuracy: 68.94%, Test Accuracy: 62.12%
                           '''
                     Step 4:
                     Reflection: The observation shows the output of the executed training script (train_edited.py). The training process ran for 10 epochs, and the final train accuracy was 68.94%, while the test accuracy is 62.12%.
                     Research Plan and Status:
                        1) Understand the problem and the current model's performance. Done. Current model performance: Train Accuracy: 86.23%, Test Accuracy: 79.33%. Hyperparameters: Batch size: 128, Epochs: 5, Learning rate: 0.1, Momentum: 0.9.
                        2) Improve the model performance by tuning hyperparameters. **In** progress. Edited the training script (train_edited.py) to change the number of epochs to 10, decrease the learning rate to 0.01, and introduce weight decay with a value of 0.0001. Executed the edited script, but the test accuracy (62.12%) did not improve by more than 10% compared to the original model performance (79.33%).
                        3) Save per class probabilities for test set examples to submission.csv.
                     Fact Check:
                        - The current model performance (Train Accuracy: 86.23%, Test Accuracy: 79.33%) is directly confirmed by the observation.
                        - The hyperparameters used in the training script (Batch size: 128, Epochs: 5, Learning rate: 0.1, Momentum: 0.9) are directly confirmed by the observation.
                        - The edit to the training script (train_edited.py) to change the number of epochs to 10, decrease the learning rate to 0.01, and introduce weight decay with a value of 0.0001 is directly confirmed by the observation.
                        - The execution of the edited training script (train_edited.py) is directly confirmed by the observation.
                        - The final train accuracy (68.94%) and test accuracy (62.12%) are directly confirmed by the observation.
                     Thought: The edited training script (train_edited.py) did not lead to a significant improvement in test accuracy. The test accuracy only reached 62.12%, which is lower than the original test accuracy of 79.33%. This indicates that the hyperparameter changes made in train_edited.py were not effective in improving the model performance.
                     Action: Request Planning Expert Help
                     Action Input: {
                     "request": "I have tried tuning the hyperparameters (number of epochs, learning rate, and weight decay) of the training script, but the test accuracy did not improve by more than 10%. Can you provide guidance on how to proceed?"
                        }
                     Observation:
                        '''
                     Planning expert was called for help, but it failed to give response in valid format within maximum 1 retries allowed.
                        '''
                     Step 5:
                     Reflection: The observation indicates that the planning expert was called for help but failed to give a response in a valid format within the maximum number of retries allowed.
                     Research Plan and Status:
                        1) Understand the problem and the current model's performance. Done. Current model performance: Train Accuracy: 86.23%, Test Accuracy: 79.33%. Hyperparameters: Batch size: 128, Epochs: 5, Learning rate: 0.1, Momentum: 0.9.
                        2) Improve the model performance by tuning hyperparameters. Done. Edited the training script (train_edited.py) to change the number of epochs to 10, decrease the learning rate to 0.01, and introduce weight decay with a value of 0.0001. Executed the **edited** script, but the test accuracy (62.12%) did not improve by more than 10% compared to the original model performance (79.33%).
                        3) Save per class probabilities for test set examples to submission.csv.
                     Fact Check:
                        - The current model performance (Train Accuracy: 86.23%, Test Accuracy: 79.33%) is directly confirmed by the observation.
                        - The hyperparameters used in the training script (Batch size: 128, Epochs: 5, Learning rate: 0.1, Momentum: 0.9) are directly confirmed by the observation.
                        - The edit to the training script (train_edited.py) to change the number of epochs to 10, decrease the learning rate to 0.01, and introduce weight decay with a value of 0.0001 is directly confirmed by the observation.
                        - The execution of the edited training script (train_edited.py) is directly confirmed by the observation.
                        - The final train accuracy (68.94%) and test accuracy (62.12%) are directly confirmed by the observation.
                        - The failure of the planning expert to give a response in a valid format within the maximum number of retries allowed is directly confirmed by the observation.
                     Thought:
                        Since the planning expert did not provide any guidance, I will try to explore other options to improve the model's performance. One possible approach is to try different neural network architectures or to use a different dataset.
                     Action:
                        Final Answer
                        Action Input:
                           {
                        "final_answer": "I have tried tuning the hyperparameters of the training script, but the test accuracy did not improve by more than 10%. The planning expert did not provide any guidance. Therefore, I am unable to improve the model performance within the given constraints."
                           }
                        Observation:
                           '''
                           end
                           '''

### Experimentation and Results

The system 100 and the method of the present disclosure performed experiments on the subset of tasks of MLAgentBench dataset. The MLAgentBench is a dataset designed for evaluating LLM Agents for Machine Learning (ML) tasks. ML tasks defined within the MLAgentBench dataset are specified with clarity, providing a concise description of the desired objective, evaluation metric, and submission guidelines. For example, tasks involve improving model accuracy on a given dataset or optimizing a specific performance metric. The dataset also provides necessary files containing training and testing data, along with detailed descriptions of the data and metrics.

Starter code, implemented across diverse ML frameworks like PyTorch, TensorFlow, JAX, and Keras, is provided to assist agents in getting started. While some tasks (cifar10, ogbnarxiv, etc.) offer baseline implementations for comparison, others (imdb, house-price, etc) require agents to code models from scratch based on the provided specifications and dataset files.

In the MLAgentBench framework, each task represents an environment where agents interact by performing actions and receiving observations. The benchmark offers a set of primitive low-level actions, including file system operations (for example, list files, read, write, append, copy, etc.), executing Python scripts, and declaring final answers. Additionally, there also exist high-level actions such as understanding a file, reflection (looking over past steps and contemplating based on the given description of what to reflect on), inspecting a segment of a file and editing a script (or a script segment). High-level actions may call some low-level actions or LLMs internally (for example understand file action might result in file contents being passed to an LLM and asking it to understand the contents.). Each action is accompanied by comprehensive documentation, specifying its name, description, usage guidelines, expected return values, and implementation. These actions enable LLM agent to manipulate files, execute scripts, and declare final outcomes within the task environment, facilitating iterative problem-solving and evaluation.

The system 100 and method of the present disclosure considered a subset of MLAgentBench dataset. The following tasks are considered by the present disclosure: (i) Canonical tasks such as cifar10 (Krizhevsky, 2009), IMDb (Maas et al., 2011) and ogbn-arxiv (Hu et al., 2021)), (ii) Classic Kaggle tasks such as house-price (Anna Montoya, 2016) and spaceship-titanic (Addison Howard, 2022), (iii) Kaggle Challenges such as parkinsons-disease (Leslie Kirsch, 2023) and feedback (Alex Franklin, 2022)) (iv) Current Research such as CLRS (Veli 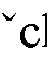 kovi'c et al., 2022) and BabyLM (Warstadt et al., 2023)) and (v) Improve Code tasks such as llama-inference and vectorization.

### Metrics

The system 100 evaluated the results of the method of the present disclosure by taking two metrics under consideration.

Success Rate: The success rate is the percentage (%) of runs which are considered as successful. As per defined in Huang et al. (2023), a run is considered to be successful if it achieves more than 10% improvement at the last step over the average performance of the baseline in the starter code. Here the performance measure is task specific. For canonical tasks, classic kaggle, kaggle challenges and current research type tasks as mentioned aabove, the prediction accuracy of the final submission.csv file is considered as the performance metric. For improve code type tasks, the improvement in the runtime of the code is considered as a success metric, whereas for CLRS, the saved final model checkpoints are evaluated for accuracy and improvement in accuracy is considered as success criteria.

Cost: If an LLM has a monetary cost associated with it, the system 100 computed the average cost in dollars ($) per run based on number of tokens used for that model. For LLMs where APIs are available, this becomes $[(Cost per input token * Num of input tokens) + (Cost per output token * Num of output tokens)]. Claude1 V1.0 used as a single agent in Huang et al. (2023) is discontinued and hence latest pricing details for this are unavailable. For approximating cost for Claude, the system 100 uses pricing information for Claude-Instant.

### Models and hyperparameters

The system 100 analyzed multiple no-cost LLMs such as Gemini, CodeLlama and Mixtral as single agents to test their ML problem solving capabilities. The system 100 employed two configurations for the multi-agent framework: (i) Gemini, which is best performing single agent LLM, with ChatGPT 7 in cascade. (ii) Gemini with GPT4 in cascade and 'Ask-the-Expert' agent. For the runs by the system 100, hyperparameters have been set as per the implementation of Huang et al. (2023).

The maximum number of actions was set to 30. Maximum number of recent actions to be included in context as the short-term memory was set to to 3. For runs involving cascades, the maximum number of retries allowed (m) was set to 3 for Gemini-Pro, 3 for ChatGPT and 1 for GPT4 in the interest of cost. For ask-the-expert GPT4 calls also, the maximum number of retries allowed was set at 1. The maximum number of times an action can be consecutively repeated (r) was set to 3. For planning-related LLM calls, the temperature was set to 0.2 and for internal action-related LLM calls, the temperature was set to 0.01, since some amount of diversity is needed in the output for the former and more definitive responses for latter. For runs involving ask-the-planning-expert calls, GPT4 was implemented as the planning expert and the maximum number of calls to GPT4 (lifelines l) was set to 5. Note that this also includes the calls made to GPT4 in an LLM cascade. Since the exact monetary cost for GPT4 and Claude single agent runs from Huang et al. (2023) was not made available, these costs were approximated for comparison. The system 100 used the average token usage from other single agent runs, namely Gemini-Pro and CodeLlama, after multiplying with a factor of 0.809 to account for 19.1% lesser token usage by GPT4 as suggested by Huang et al. (2023).

### Baselines

The system 100 used following baselines: (i) Single Agent GPT4 in retrieval setting (G + R) (ii) Single Agent GPT4 with no retrieval (G) (iii) Single Agent Claude V1.0 in retrieval setting (C + R) (iv) Single Agent Claude V1.0 with no retrieval (C) ((i) to (iv) are from Huang et al. (2023)) (v) Single Agent Gemini Pro in retrieval setting (Ge + R) (vi) Single Agent Code Llama in retrieval setting (Co + R) (vii) Single Agent Mixtral in retrieval setting (Mx + R) ((v) to (vii) are our baselines using no-cost LLMs).

### Results and Discussion

The system 100 and method of the present disclosure address key Research Questions (RQ) based on the results in Table 2.

**Table 2**

| Task | Single Agent (Huang et al. 2023) | | | | | | Profiling + Cascade | | Profiling + Cascade + Expert | |
|---|---|---|---|---|---|---|---|---|---|---|
| | G+ R | G | C+ R | C | Ge +R | Ge | Ge+ Ch+ R | Ge+ Ch | Ge+ G+ R | Ge+ G |
| **Cifar10** | 25 ($0. 583 ) | 50 ($0. 44) | 8 ($0. 058 ) | 48 ($0. 044 ) | 12 .5 | 0 | 62.5 | 25 | **75 ($0. 057)** | 37.5 ($0. 06) |
| **imdb** | 12.5 ($1. 48) | **25 ($0. 919)** | 0 ($0. 147 ) | 0 ($0. 091 ) | 0 | 0 | 0 | 0 | 0 ($0. 014) | 0 ($0. 071 ) |
| **ogbn-arxiv** | 50 ($1. 27) | **87.5 ($1. 112)** | 40 ($0. 125 ) | 32 ($0. 109 ) | 25 | 25 | 50 | 50 | 50 ($0. 033) | 75 ($0. 026 ) |
| **house-price** | 25 ($1. 6) | 12.5 ($0. 938 ) | 64 ($0. 158 ) | 76 ($0. 093 ) | 25 | 37 .5 | 62.5 | 62.5 | **87.5 ($0. 091)** | 75 ($0. 038 ) |
| **spaceshiptitanic** | 25 ($1. 42) | 12.5 ($0. 885 ) | 4 ($0. 141 ) | 16 ($0. 088 ) | 37 .5 | 37 .5 | 75 | **100 ($0. 0004 )** | 75 ($0. 021) | **100 ($0. 091 )** |
| **parkinsonsdisea se** | **12.5 ($2. 9)** | 0 ($1. 57) | 0 ($0. 287 ) | 0 ($0. 155 ) | 0 | 0 | 0 | 0 | 0 ($0. 099) | 0 ($0. 107 ) |
| **feedback** | **37.5 ($1. 25)** | 12.5 ($1. 15) | 0 ($0. 124 ) | 0 ($0. 114 ) | 0 | 0 | 0 ($0.0 005) | 0 | 0 ($0. 047) | 0 ($0. 022 ) |
| **llamainference** | 0 ($1. 46) | 0 ($0. 927 ) | 0 ($0. 145 ) | 8 ($0. 092 ) | 0 | 0 | 0 ($0.0 003) | 0 | 0 ($0. 027) | 0 ($0. 055 ) |
| **vectorization** | 0 ($1. 16) | 0 ($1. 23) | 0 ($0. 114 ) | 0 ($0. 121 ) | 0 | 12 .5 | 0 | 12.5 | 0 ($0. 017) | **75 ($0. 004)** |
| **CLRS (Cormen, Leiserson, Rivest, Stein) - refer https://arxiv.org /pdf/2205.15659** | 12.5 ($0. 523 ) | 50 ($0. 43) | **52 ($0. 052)** | 40 ($0. 042 ) | 0 | 0 | 0 ($0.0 003) | 0 | 0 ($0. 027) | 0 ($0. 046 ) |
| **babylm** | 0 ($0. 818 ) | 0 ($0. 637 ) | 0 ($0. 081 ) | 0 ($0. 063 ) | 0 | 0 | 0 ($0.0 025) | 0 ($0. 001) | 0 ($0. 086) | 0 ($0. 078 ) |
| **Average** | 18.1 8 ($1. 315 ) | 22.7 2 ($0. 931 ) | 15.2 7 ($0. 13) | 20 ($0. 092 ) | 9. 09 | 10 .2 3 | 22.7 2 ($0.0 003) | 22.7 2 ($0. 0001 ) | 26.1 4 ($0. 047) | **32.9 5 ($0. 054 )** |

In Table 2, each cell depicts Success Rate in %: % successful runs, ($): Average cost per run (0 unless mentioned otherwise); G - GPT4, C - Claude V1.0, Ge - Gemini Pro, Co - CodeLlama Instruct 34b, Ch - ChatGPT (GPT 3.5 Turbo), R - Retrieval: The agent has access to complete logs and can retrieve and summarize relevant stuff. In no-retrieval setting this functionality was disabled.

RQ1 - Do no-cost LLM single-agents sacrifice performance for cost savings? The system 100 observed a significant drop in the performance when a purely no-cost LLM (Ge, Co, and Mx) was used in single-agent setting across all tasks as opposed to LLM single agents using GPT4 or Claude presented in Huang et al. (2023). The system 100 further observed that CodeLlama (Co) and Mixtral (Mx) were unable to produce any successful runs leading to average 0% success rate. Thus, the system 100 omits them from the results in Table 2. It is seen that Mixtral is almost never able to adhere to the required response format mentioned in section 3.1 across all runs, which leads to termination due to maximum retry limit being exceeded. However, the system 100 observed that Gemini-Pro (Ge + R) is able to produce successful runs in single agent setting yielding non-zero performance for some tasks (cifar10, ogbn-arxiv, house-price and spaceship-titanic) but zero for others.

Visual inspection reveals that there is not much difference between the quality of responses in internal action-related LLM calls between Gemini-Pro and CodeLllama, with the former being slightly superior. However, the system 100 observed that Code Llama is unable to produce any successful runs due to its inability to plan effectively.

RQ2 - How do profiling and cascades affect performance and cost? From Table 2, it can be seen that profiling with Gemini-Pro as base LLM and ChatGPT (GPT-3.5-turbo) in cascade (Ge + Ch) both with and without retriever setting, significantly increases success rate for many tasks, namely cifar10, ogbn-arxiv, house-price, spaceshiptitanic and vectorization when compared with Ge as single agent. However, for imdb, parkinsons-disease, feedback, llama-inference, CLRS and babylm tasks, the performance still remains zero due to their complex nature. Overall average success rate of profiling and cascade is comparable with GPT4 (G) performance. These improvements were obtained at almost 100% cost reduction (From $1.315 for G + R and $0.13 for C + R to $0.0003 for Ge + Ch + R and from $0.931 for G and $0.092 for C to $0.0001 for Ge + Ch). This is because inference for GPT-3.5-turbo is much cheaper (or less expensive) leading to minuscule costs. However, qualitative analysis shows that GPT-3.5-turbo often fails to adhere to the required response format mentioned in section 3.1 leading to further retries. Thus, the system 100 shifts to GPT4 for cascades for subsequent runs.

RQ3 - How do adding ask-the-expert lifelines to profiling and cascade affect performance and cost?

Table 2 shows that access to GPT4 ask-the-expert lifeline calls as part of the system 100 (Ge + G and Ge + G + R) improves success rate for cifar10, ogbn-arxiv, house-price, spaceship-titanic and vectorization tasks when compared with Ge + Ch+ R and Ge + Ch. Additionally, the system 100 and the method of the present disclosure observe improvements in success rate when compared with G + R and G for cifar10, house-price, spaceship-titanic and vectorization tasks at a cost reduction ranging from 90-99% across tasks. On an average the Profiling + Cascade + Expert setting and using GPT4 for cascade and expert gives 43.78% and 71.19% improvement in retrieval setting and 45.02% and 64.75% improvement in non-retrieval setting over GPT4 and Claude as single agent, respectively. This comes at 96.43% and 63.85% reduction in cost in retrieval setting and 94.2% and 41.3% reduction in cost in non-retrieval setting over GPT4 and Claude, respectively, demonstrating the efficacy of the method of the present disclosure. Qualitative analysis reveals that there are instances when the planner can successfully identify that it is stuck and calls the expert to get itself 'unstuck'. For example, if a particular edit does not lead to proper execution after multiple steps, and if the expert is called, it takes a different action such as understanding some part of the file better before making further edits.

RQ4 - How does retrieval from logs affect performance and cost?

In accordance with the findings of Huang et al. (2023), the observations indicate that while access to retrieval from logs proves effective for certain tasks, for others, disabling it yields better results. One interesting case to note is of cifar10. GPT4 (G) has a greater success rate than G + R. Huang et al. (2023) justify this by stating that since cifar10 is a comparatively easier task and the long-term memory context become a distraction. But the trend gets reversed in the case of Gemini-Pro with GPT4 in cascade and expert setting. Ge + G + R has a greater success rate than Ge + G. This can be due to the differences in pretraining, and actual data seen by Gemini-Pro and GPT4. Similar to success rate, cost is greater with retrieval for some tasks, whereas it is greater without retrieval for others. The average cost per run for Ge + G ($0.054) is greater than that for Ge + G + R ($0.047).

In the present disclosure, the method was implemented by an LLM Multi-agent system 100 for solving machine learning tasks in a cost-effective manner without hampering the system performance. The primary investigations on tasks defined in MLAgentBench dataset, with Single-Agent systems with purely no-cost models gave zero success rates for CodeLlama and Mixtral and very poor success rates with Gemini-Pro (9.09% with access to the complete logs and 10.23% with short-term access), as compared to paid models such as GPT4 and ClaudeV1.0 (18.18% and 22.72%, 15.27% and 20% respectively). The system 100 subsequently implemented a multi-agent framework, BudgetMLAgent, using no-cost Gemini-Pro as the base LLM, leveraging (i) profiling for a planner and multiple worker agents interacting with the ML code generation environment using distinct actions, (ii) cascades to LLMs with more expertise such as GPT-3.5-turbo and GPT4 and (iii) our novel ask-the-expert GPT4 lifelines. BudgetMLAgent resulted in improving the success rates for MLAgentBench tasks (26.14% and 32.95% respectively) along with significant cost reductions when compared with GPT4 and ClaudeV1.0 based Single-Agent systems (96.43% and 63.85% with access to the complete logs, 94.2% and 41.3% reduction with short-term access respectively).

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving, via one or more hardware processors, a task specification (202), wherein the task specification comprises a task description and one or more starter files;
obtaining, from a first task planner amongst a plurality of sequentially chained task planners via the one or more hardware processors, one or more actions to be performed along with an associated justification, and an associated reasoning thereof based on the task description and the one or more starter files (204), wherein the associated justification, and the associated reasoning are generated by the first task planner based on a first set of structured prompts;
performing, via the one or more hardware processors, a comparison of (a) the associated justification, and the associated reasoning pertaining to the one or more actions with a pre-defined format, and (b) number of attempts involved in obtaining the associated justification, and the associated reasoning pertaining in the associated format with an attempt threshold (206);
performing (208), based on the comparison, one of:
(i) invoking, by the first task planner, a first agent from a plurality of agents for execution of at least one action from the one or more actions obtained from the first task planner;
(ii) executing at least one action from the one or more actions by the first agent; and
(iii) generating an execution log based on the at least one executed action and storing generated execution log in a database thereof; or
(a) obtaining, from a second task planner amongst the plurality of sequentially chained task planners via the one or more hardware processors, the one or more actions to be performed along with the associated justification, and the associated reasoning thereof based on the task description, wherein the associated justification, and the associated reasoning are generated by the second task planner based on a second set of structured prompts; and
(b) invoking, by the second task planner, a second agent from the plurality of agents for execution of the at least one action from the one or more actions based on number of attempts involved in generating the associated justification, and the associated reasoning in the associated format.

2. The processor implemented method as claimed in claim 1, wherein the second agent is invoked for execution of the at least one action that has been previously repeated for 'm' consecutive times for 'n' steps.

3. The processor implemented method as claimed in claim 1, wherein each task planner from the plurality of sequentially chained task planners is associated with a unique task planner cost.

4. The processor implemented method as claimed in claim 1, wherein the one or more starter files comprise information in programming code and natural language.

5. The processor implemented method as claimed in claim 1, wherein each task planner from the plurality of sequentially chained task planners and each agent amongst the plurality of agents comprises an action-based distinct profile that indicates a role being executed during the one or more actions being generated or performed.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a task specification, wherein the task specification comprises a task description and one or more starter files;
obtain, from a first task planner amongst a plurality of sequentially chained task planners, one or more actions to be performed along with an associated justification, and an associated reasoning thereof based on the task description and the one or more starter files, wherein the associated justification, and the associated reasoning are generated by the first task planner based on a first set of structured prompts;
perform a comparison of (a) the associated justification, and the associated reasoning pertaining to the one or more actions with a pre-defined format, and (b) number of attempts involved in obtaining the associated justification, and the associated reasoning pertaining in the associated format with an attempt threshold;
perform, based on the comparison, one of:
(i) invoking, by the first task planner, a first agent from a plurality of agents for execution of at least one action from the one or more actions obtained from the first task planner;
(ii) executing at least one action from the one or more actions by the first agent; and
(iii) generating an execution log based on the at least one executed action and storing generated execution log in a database thereof; or
(a) obtaining, from a second task planner amongst the plurality of sequentially chained task planners via the one or more hardware processors, the one or more actions to be performed along with the associated justification, and the associated reasoning thereof based on the task description, wherein the associated justification, and the associated reasoning are generated by the second task planner based on a second set of structured prompts; and
(b) invoking, by the second task planner, a second agent from the plurality of agents for execution of the at least one action from the one or more actions based on number of attempts involved in generating the associated justification, and the associated reasoning in the associated format.

7. The system as claimed in claim 6, wherein the second agent is invoked for execution of the at least one action that has been previously repeated for 'm' consecutive times for 'n' steps.

8. The system as claimed in claim 6, wherein each task planner from the plurality of sequentially chained task planners is associated with a unique task planner cost.

9. The system as claimed in claim 6, wherein the one or more starter files comprise information in programming code and natural language.

10. The system as claimed in claim 6, wherein each task planner from the plurality of sequentially chained task planners and each agent amongst the plurality of agents comprises an action-based distinct profile that indicates a role being executed during the one or more actions being generated or performed.

11. One or more non-transitory machine-readable information storage mediums comprising one or more instructions which when executed by one or more hardware processors cause:
receiving a task specification, wherein the task specification comprises a task description and one or more starter files;
obtaining, from a first task planner amongst a plurality of sequentially chained task planners, one or more actions to be performed along with an associated justification, and an associated reasoning thereof based on the task description and the one or more starter files, wherein the associated justification, and the associated reasoning are generated by the first task planner based on a first set of structured prompts;
performing a comparison of (a) the associated justification, and the associated reasoning pertaining to the one or more actions with a pre-defined format, and (b) number of attempts involved in obtaining the associated justification, and the associated reasoning pertaining in the associated format with an attempt threshold ;
performing based on the comparison, one of:
(i) invoking, by the first task planner, a first agent from a plurality of agents for execution of at least one action from the one or more actions obtained from the first task planner;
(ii) executing at least one action from the one or more actions by the first agent; and
(iii) generating an execution log based on the at least one executed action and storing generated execution log in a database thereof; or
(a) obtaining, from a second task planner amongst the plurality of sequentially chained task planners, the one or more actions to be performed along with the associated justification, and the associated reasoning thereof based on the task description, wherein the associated justification, and the associated reasoning are generated by the second task planner based on a second set of structured prompts;
(b) invoking, by the second task planner, a second agent from the plurality of agents for execution of the at least one action from the one or more actions based on number of attempts involved in generating the associated justification, and the associated reasoning in the associated format.

12. The one or more non-transitory machine-readable information storage mediums as claimed in claim 11, wherein the second agent is invoked for execution of the at least one action that has been previously repeated for 'm' consecutive times for 'n' steps.

13. The one or more non-transitory machine-readable information storage mediums as claimed in claim 11, wherein each task planner from the plurality of sequentially chained task planners is associated with a unique task planner cost.

14. The one or more non-transitory machine-readable information storage mediums as claimed in claim 11, wherein the one or more starter files comprise information in programming code and natural language.

15. The one or more non-transitory machine-readable information storage mediums as claimed in claim 11, wherein each task planner from the plurality of sequentially chained task planners and each agent amongst the plurality of agents comprises an action-based distinct profile that indicates a role being executed during the one or more actions being generated or performed.
